**Europäisches Patentamt**

**European Patent Office**

**Office européen des brevets**

(19)

(11) Numéro de publication : **0 409 671 B1**

## (12) FASCICULE DE BREVET EUROPEEN

(45) Date de publication du fascicule du brevet :
**23.12.92 Bulletin 92/52**

(51) Int. Cl.⁵ : **B60T 13/565**

(21) Numéro de dépôt : **90401455.2**

(22) Date de dépôt : **31.05.90**

(54) **Ensemble composé d'un servomoteur pneumatique, d'un maître-cylindre et d'un réservoir.**

(30) Priorité : **19.07.89 FR 8909653**

(43) Date de publication de la demande :
**23.01.91 Bulletin 91/04**

(45) Mention de la délivrance du brevet :
**23.12.92 Bulletin 92/52**

(84) Etats contractants désignés :
**DE ES FR GB IT**

(56) Documents cités :
**DE-A- 3 612 357**
**US-A- 3 013 537**

(73) Titulaire : **BENDIX EUROPE Services Techniques S.A.**
**126 rue de Stalingrad**
**F-93700 Drancy (FR)**

(72) Inventeur : **Meynier, Guy, Bendix Europe Services Techniques, 126 rue de Stalingrad**
**F-93700 Drancy (FR)**

EP 0 409 671 B1

**Description**

La présente invention concerne un ensemble composé d'un servomoteur pneumatique à dépression, d'un maître-cylindre, et d'un réservoir de fluide sous basse pression alimentant le maître-cylindre.

Un tel ensemble est généralement mis en oeuvre dans le circuit de freinage des véhicules automobiles, mais sert, de façon générale, à convertir un effort exercé sur une pédale de commande en une pression de fluide desservant au moins un moteur fluidique.

De façon connue, le servomoteur d'un tel ensemble comporte au moins une chambre reliée à une source de dépression par l'intermédiaire d'une valve de retenue pour maintenir un vide dans cette chambre pendant un certain temps après le tarissement de la source. La source de dépression est généralement obtenue par effet Venturi au niveau du carburateur du moteur thermique du véhicule, ou bien elle est constituée par une pompe à vide conventionnelle.

Dans l'Art Antérieur par exemple US-A-3 013 537, la valve de retenue est disposée dans le boîtier du servomoteur dans une zone périphérique où ne s'exercent pas trop de forces de traction dans la tôle du boîtier. Cette zone constitue cependant une zone de faiblesse du boîtier, et nécessite un traitement spécifique. En outre, disposée à la périphérie du boîtier du servomoteur, cette valve constitue un élément faisant saillie et pouvant gêner du fait de l'encombrement général du compartiment moteur.

Pour libérer ce compartiment moteur, on a prévu par ailleurs de disposer le servomoteur dans l'habitacle du véhicule, l'ensemble servomoteur-maître-cylindre étant fixé au tablier de séparation au niveau des vis de fixation du maître-cylindre au servomoteur. Dans ce cas, la valve de retenue constitue une gêne évidente pour les passagers du fait des bruits engendrés pour l'obtention et le maintien de la dépression. De plus, un tube doit alors traverser le tablier.

La présente invention a pour but d'obvier à ces inconvénients au moyen d'un ensemble compact et peu coûteux.

Dans DE-A-3 612 357, la chambre sous vide du servomoteur pneumatique est reliée à la source de dépression par l'intermédiaire d'un conduit ménagé dans le maître-cylindre, la valve de retenue étant disposée à la sortie du conduit.

Selon l'invention, la valve de retenue est disposée à l'extrémité d'une pipe dont l'autre extrémité est reliée, de façon étanche, au conduit ménagé dans le maître-cylindre, la valve et la pipe étant intégrées au réservoir et pouvant former un ensemble monolithique avec ce dernier. La pipe comporte alors un prolongement s'enclipsant de manière étanche dans un orifice prévu à cet effet dans le maître-cylindre et communiquant avec le conduit.

L'invention sera mieux comprise et d'autres buts, avantages et caractéristiques de celle-ci apparaîtront plus clairement à la lecture de la description qui suit de modes de réalisation donnés à titre non limitatif et à laquelle une planche de dessins est annexée sur laquelle :

- la Figure 1 représente schématiquement en coupe un ensemble conforme à un premier mode de réalisation de l'invention ;
- la Figure 2 représente schématiquement l'ensemble illustré Figure 1 en coupe partielle selon la ligne II-II de la Figure 1, et
- la Figure 3 représente schématiquement en coupe un ensemble conforme à un deuxième mode de réalisation de l'invention.

En référence maintenant aux Figures qui viennent d'être succinctement décrites, l'ensemble constitué d'un servomoteur pneumatique 1, d'un maître-cylindre 3 et d'un réservoir 5 a été très schématiquement représenté, étant entendu que l'homme du métier connaît parfaitement bien ces composants. Ceux-ci ne seront d'ailleurs pas décrits ci-après sauf en leur relation avec l'invention.

Le servomoteur 1 comporte un boîtier, la chambre sous vide étant, dans l'exemple illustré, la chambre adjacente à la paroi avant représentée du servomoteur. Un ressort 7 s'appuyant sur une coupelle s'appuyant elle-même sur un renfort prévu à l'intérieur de cette chambre contre le boîtier rappelle le piston (non représenté) du servomoteur en position de repos.

Le maître-cylindre 3 pénètre à l'intérieur du servomoteur. Il est fixé de manière étanche à cette paroi avant du servomoteur, par l'intermédiaire d'une collerette 9 pourvue d'un joint annulaire d'étanchéité 11, au moyen de vis (non représentées). Dans un mode d'application, l'ensemble sera fixé au tablier du véhicule par l'intermédiaire de cette même collerette 9.

Le réservoir 5 est disposé de façon à alimenter en fluide les chambres du maître-cylindre 3 de façon tout-à-fait conventionnelle.

Un conduit 21 est ménagé dans le maître-cylindre, par exemple parallèlement à l'axe de ce dernier. Ce conduit 21 est en communication directe avec la chambre sous vide. Un orifice de sortie 23 est pratiqué pour communiquer avec le conduit 21.

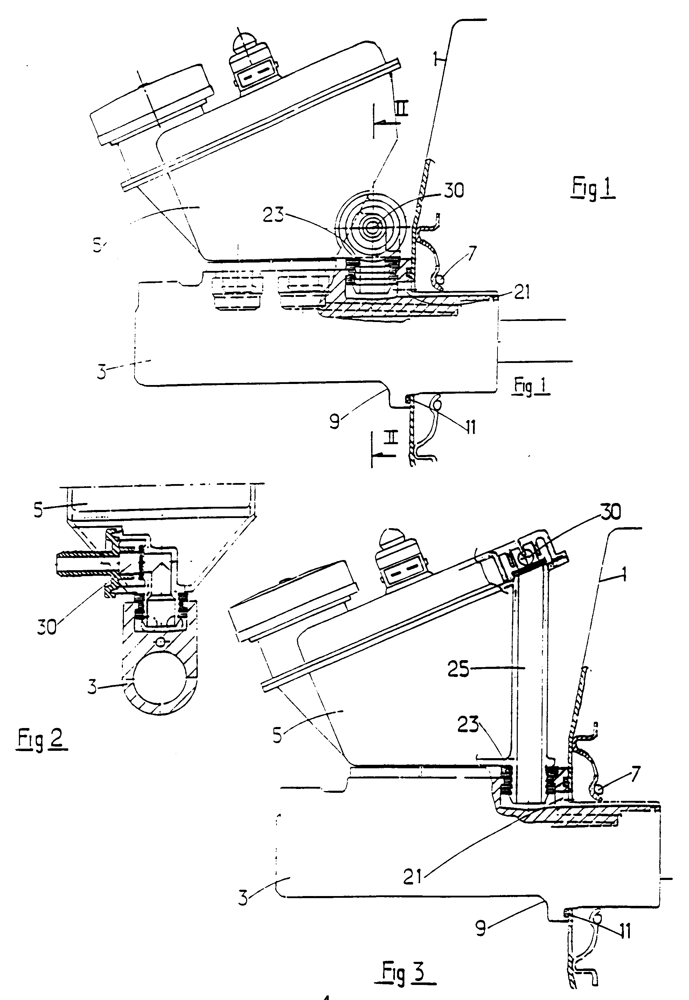

Dans le mode de réalisation représenté Figures 1 et 2, une valve de retenue 30 est directement enclipsée dans l'orifice de sortie 23.

Dans le mode de réalisation représenté Figure 3, la valve de retenue 30 est disposée à une extrémité d'une pipe 25 dont l'autre extrémité est enclipsée dans l'orifice 23. A cet effet, la pipe 25 comporte un prolongement pouvant être introduit dans une pièce annulaire en élastomère fixée à l'orifice 23 pour éviter tout problème d'étanchéité.

En outre, pour faciliter la mise en place de cette pipe 25 dans l'orifice 23 et pour réduire le temps d'assemblage, la pipe 25 et la valve 30 sont intégrées au réservoir 5. Ainsi lors de la mise en place de ce dernier sur le maître-cylindre 3, la pipe 25 d'une part, et les deux sorties habituelles de fluide, sont directement connectées au maître-cylindre en une opération unique. De préférence, la pipe 25, la valve 30 et le réservoir 5 sont réalisés de façon monolithique, de manière à constituer une seule pièce obtenue par scellement ultrasonique de deux pièces injectées après ajout de l'élément de clapet et du classique flotteur du détecteur de niveau de fluide du réservoir.

L'homme du métier aura compris que de nombreuses modifications pourront être apportées à l'invention sans sortir du cadre défini par les revendications.

## Revendications

1.  Ensemble composé d'un servomoteur pneumatique à dépression (1), d'un maître-cylindre (3) et d'un réservoir (5) de fluide sous basse pression alimentant ledit maître-cylindre, ledit ensemble étant destiné à convertir un effort exercé sur une pédale de commande en une pression de fluide desservant au moins un moteur fluidique, ledit servomoteur (1) comportant au moins une chambre reliée à une source de dépression par l'intermédiaire d'une valve de retenue (30), ladite chambre étant reliée à ladite source par l'intermédiaire d'un conduit (21) ménagé dans ledit maître-cylindre (3), caractérisé en ce que ladite valve de retenue (30) est disposée à l'extrémité d'une pipe (25) dont l'autre extrémité est reliée, de façon étanche, audit conduit (21), ladite valve de retenue (30) et ladite pipe (25) étant intégrées audit réservoir (5).

2.  Ensemble selon la revendication 1 caractérisé en ce que ladite valve de retenue (30), ladite pipe (25) et ledit réservoir (5) forment un ensemble monolithique, ladite pipe comportant un prolongement s'enclipsant de manière étanche dans un orifice (23) prévu à cet effet dans le maître-cylindre (3) et communiquant avec ledit conduit (21).

## Patentansprüche

1.  Ensemble, das aus einem pneumatischen Unterdruck-Kraftverstärker (1), einem Hauptzylinder (3) und einem den Hauptzylinder versorgenden Niederdruck-Fluidvorratsbehälter (5) zusammengesetzt ist und dazu bestimmt ist, eine auf ein Steuerpedal ausgeübte Kraft in einen Fluiddruck umzuwandeln, der zumindest einen Fluidmotor versorgt, wobei der Kraftverstärker (1) zumindest eine Kammer umfaßt, die über ein Rückschlagventil (30) mit einer Unterdruckquelle verbunden ist und die Kammer mittels einer in dem Hauptzylinder (3) ausgebildeten Leitung mit der quelle verbunden ist, **dadurch gekennzeichnet,** daß das Rückschlagventil (30) am Ende eines Rohres (25) angeordnet ist, dessen anderes Ende dicht mit der Leitung (21) verbunden ist, wobei das Rückschlagventil (30) und das Rohr (25) in dem Vorratsbehälter (5) integriert sind.

2.  Ensemble nach Anspruch 1, **dadurch gekennzeichnet,** daß das Rückschlagventil (30), das Rohr (25) und der Vorratsbehälter (5) eine monolithische Einheit bilden, wobei das Rohr eine Verlängerung umfaßt, die dicht in eine Öffnung (23) einsteckbar ist, die hierzu in dem Hauptzylinder (3) vorgesehen und mit der Leitung (21) verbunden ist.

## Claims

1.  Assembly composed of a vacuum pneumatic booster (1), a master cylinder (3) and a reservoir (5) of fluid under low pressure which feeds said master cylinder, said assembly being intended to convert a force exerted on a control pedal into a fluid pressure supplying at least one fluid motor, said booster (1) having at least one chamber connected to a vacuum source via a non-return valve (30), said chamber being connected to said source via a duct (21) formed in said master cylinder (3), characterised in that said non-return valve (30) is arranged at the end of a pipe (25), the other end of which is connected in a sealed manner to said duct (21), said non-return valve (30) and said pipe (25) being incorporated into said reservoir (5).

2.  Assembly according to Claim 1, characterised in that said non-return valve (30), said pipe (25) and said reservoir (5) form a monolithic assembly, said pipe having an extension which is inserted in a sealed manner into an orifice (23) provided for this purpose in the master cylinder (3) and communicating with said duct (21).

Fig 1

Fig 1

Fig 2

Fig 3